# EUROPEAN PATENT SPECIFICATION

(11) **EP 4 289 585 B1**
(45) Date of publication and mention of the grant of the patent: **28.08.2024**
(21) Application number: 23165132.4
(22) Date of filing: 29.03.2023
(51) Int. Cl.: B29B 17/00, B09B 3/32, B29B 17/04, B29L 31/48, B29K 67/00, B09B 101/65

(54) **PROCESS FOR RECYCLING A POLYESTER-BASED MATERIAL**
VERFAHREN ZUR WIEDERVERWERTUNG EINES POLYESTERBASIERTEN MATERIALS
PROCÉDÉ DE RECYCLAGE D'UN MATÉRIAU À BASE DE POLYESTER

(30) Priority: 10.06.2022 IT 202200012362
(43) Date of publication of application: 13.12.2023
(73) Proprietor: Simap S.r.l., 24021 Albino (BG) (IT)
(72) Inventor: BALDUZZI, Matteo, 24128 Bergamo (IT); BALDUZZI, Abramo, 24023 Clusone (Bergamo) (IT)
(74) Representative: Rapisardi, Mariacristina

(56) References cited:
- EP-A1- 3 922 665
- CN-A- 109 352 871
- KR-A- 20140 105 097
- TW-B- I 684 507

## Description

The present invention relates to a process for recycling polyester-based materials/fabrics.

As is well known, surgical gowns and drapes are typically produced with polyester-based technical fabrics, where at present the type of polyester most widely used for such technical fabrics is PET (polyethylene terephthalate), to which carbon fibre or another material, for example polyurethane (PU) membranes, is often, though not always, added.

It is known that surgical gowns and drapes thus produced, if suitably treated and reprocessed, can reach and surpass tens of industrial washing and sterilisation cycles.

It is also known that at the end of their useful life cycle, such materials are generally not recycled because of the complexity and cost of the operation.

In particular, the direct reuse of the material composing surgical gowns and drapes at the end of their useful life cycle is discouraged because of the fact that it poses difficulties for obtaining objects of suitable characteristics cost-effectively, due also but not only to the presence of other materials besides polyesters, carbon fibre in particular.

There is thus a perceived need to recycle end-of-life surgical gowns and drapes. EP3922665A1 discloses a method for recycling clothing into plastic granule which involves collecting used fabric containing fabric fibers such as polyester, pulverizing fabric into powder of fabric particles, pelletizing with binder to form fabric pellets and extruding mixture of fabric pellets and plastic compound into plastic granules. TWI684507B discloses a method for manufacturing recycled fabric into plastic pellets which involves preparing the fabric to be recycled, pulverizing it and forming a multiple rags of 10 cm² or less, preparing thermoplastic granules and a compatibilizing agent. The thermoplastic granules are combined with the rag and heated to form a mixture and the mixture is agglomerated and formed into a semi-finished product and the semi-finished product is granulated and several plastic-containing particles are formed.

The technical task of the present invention, therefore, is to provide a process for producing an object from end-of-life surgical gowns and drapes that enables the aforesaid technical drawbacks of the prior art to be overcome.

Within the scope of this technical task, one aim of the invention is to provide a process for producing an object from end-of-life surgical gowns and drapes that is simple and economical. Another aim of the invention is to provide a process for producing an object from end-of-life surgical gowns and drapes that is simple and economical, and entails operations normally carried out in production lines for the moulding of objects.

The technical task, as well as these and other aims, are achieved according to the present invention by providing a process for producing an object from end-of-life surgical gowns and drapes comprising a fabric composed of between 98.5% and 99.5% by weight of polyester, and between 0.5% and 1.5% by weight of carbon fibre, characterised in that it comprises the following steps:
- selecting said fabric, removing third elements from said surgical gowns and drapes;
- fragmenting said fabric;
- sintering or densifying said fragmented fabric until obtaining irregular granules;
- producing a granular mixture by adding at least one solid granular impact modifier masterbatch for PET to said irregular granules in a dose comprised between 0.3% and 5.0% by weight of the granular mixture;
- plasticising said granular mixture directly;
- producing said object by extrusion or injection moulding (250) of said plasticised mixture.

Thanks to the provision for a specific masterbatch added to the irregular granules, said process for recycling surgical gowns and drapes with fabrics based on polyester mixed with a carbon fibre additive is not subject to continuous and significant breakages of the object already during moulding, and the final product is cohesive and break resistant.

Advantageously, it has been found that the aforesaid process for recycling surgical gowns and drapes with fabrics based on polyester mixed with a carbon fibre additive can be carried out without subjecting the thermoplastic material to a costly regranulation operation prior to injection moulding or extrusion, since the masterbatch allows a congruous extrusion or injection moulding and prevents the material from remaining hard, woody and scarcely compact.

As it does not require regranulation, the recycling process of the invention also does not require the use of viscosity boosters typically necessary for obtaining a continuous, homogeneous regranulation of the material.

Other features of the present invention are defined, moreover, in the subsequent claims. Additional features and advantages of the invention will emerge more clearly from the description of preferred but not exclusive embodiments of the process for producing an object from end-of-life surgical gowns and drapes according to the invention, illustrated in the appended drawings, in which:
figure 1 shows a typical datasheet with the characteristics of a type of fabric for surgical gowns and drapes;
figure 2 shows a typical datasheet with the characteristics of another type of fabric for surgical gowns and drapes;

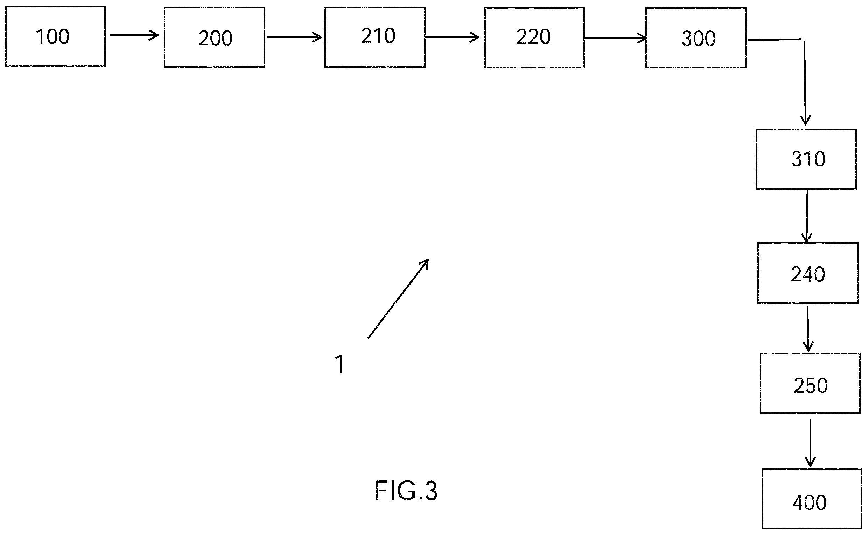

figure 3 shows a block diagram of the process according to the invention.

The following detailed description makes reference to the appended drawings, which form a part thereof.

In the drawings, similar reference numbers typically identify similar components, unless the context indicates otherwise.

The illustrative embodiments described in the detailed description and in the drawings are not to be understood as limiting.

Other embodiments may be used, and other modifications may be introduced without deviating from the appended claims.

The aspects of the present description, as generally described in the present context and illustrated in the figures, may be arranged, replaced, combined, and designed in a wide variety of configurations, which are all explicitly envisaged and part of this description.

With reference to the aforesaid figures, a process 1 for producing an object 400 from end-of-life surgical gowns and drapes 100 is described.

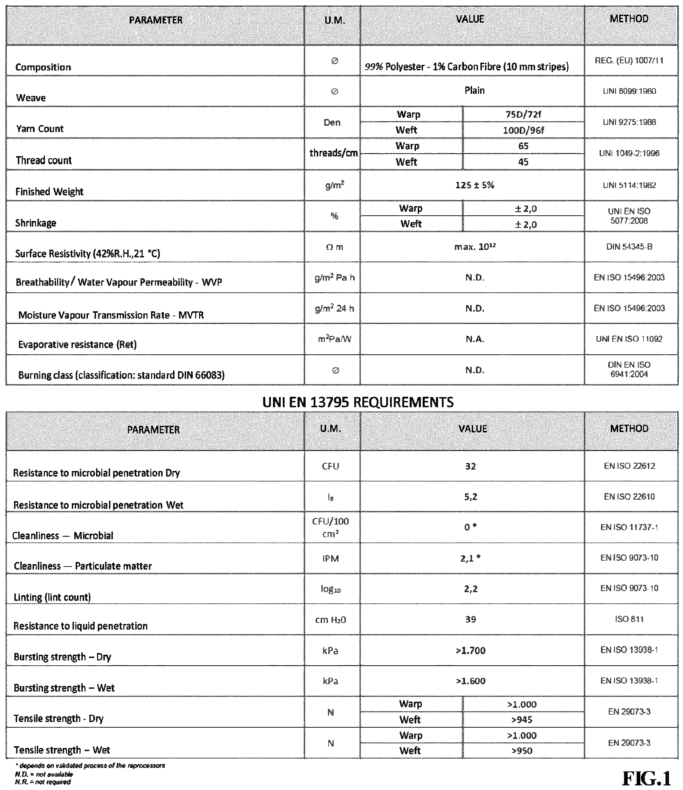

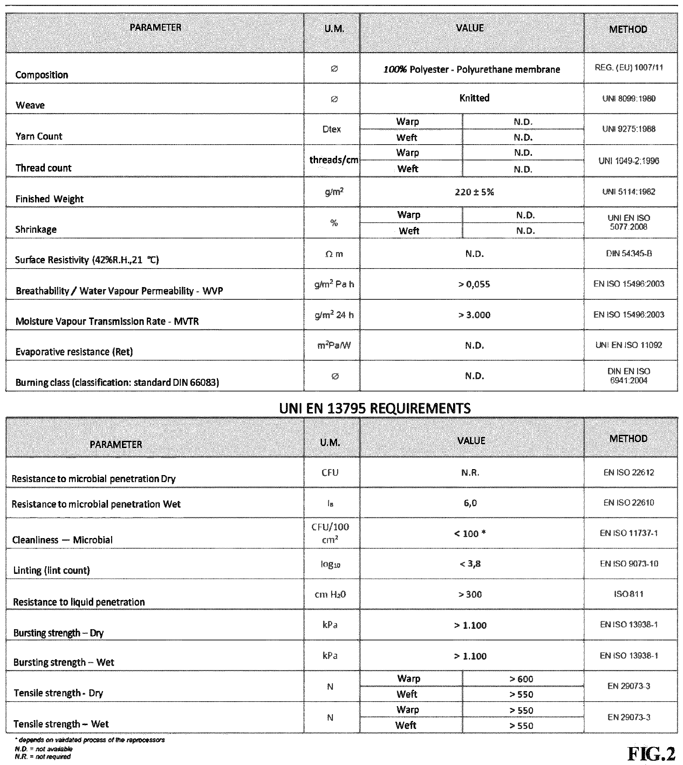

As represented in figures 1 and 2, the composition of the fabric used for the manufacture of surgical gowns and drapes 100 for operating rooms is based on polyester microfibre.

In general, as shown in the technical datasheet in figure 1, many known types of surgical gowns and drapes for operating rooms have a type of polyester microfibre-based fabric with a composition, by weight, of between 98.5% and 99.5% polyester and between 0.5% and 1.5% carbon fibre, typically 99.0% polyester and 1.0% carbon fibre.

Other known types of surgical gowns and drapes 100 for operating rooms, on the other hand, as shown in the technical datasheet in figure 2, have a type of polyester microfibre-based fabric with a composition of 100% polyester and no carbon fibre, but with an additional polyurethane (PU) membrane.

The industrial process 1 for recycling the polyester fabric of the end-of-life surgical gowns and drapes envisages, as the first operation, washing, sterilising and drying 100 gowns and drapes in industrial laundries, and a subsequent selection 200 of the sterilised fabric, with the removal, by trained personnel, of third elements including buttons, microchips and/or other elements.

Advantageously, a pressing 210 may also be provided for, with the installation, directly in industrial laundries, of pneumatic presses capable of creating pressed bales, weighing 100-200 kg each, of the materials of the end-of-life surgical gowns and drapes thus selected, for a more efficient transport of the materials to the processing units.

The processing steps for recycling the materials composing surgical gowns and drapes comprise the known activities of mechanical fragmentation 220 of the fabrics, and then densification or sintering 300 of the fragmented fabrics until irregular granules of material are obtained.

The irregular granules have maximum linear dimensions of less than 10 mm and a residual moisture comprised between 0.25% and 0.30%.

The sintering is carried out with a dry method, whereas the densification comprises, after softening, a water-cooling step and subsequent drying.

Innovatively and advantageously, according to the present invention, the process for producing an object 400 from end-of-life surgical gowns and drapes comprises extrusion or injection moulding 250 of a plasticised mixture originating from direct plasticisation 240 of granular mixture comprising the irregular granules and at least one solid granular impact modifier masterbatch additive for PET in a dose comprised between 0.3% and 5.0% by weight, preferably between 0.3% and 2.0% by weight, of the granular mixture.

Conveniently, the masterbatch according to the present invention comprises an aromatic modified anionic hydrocarbon resin.

The mixing 310 of granules to be plasticised for the extrusion or injection moulding 250 can comprise, depending on the application, other granular additives in addition to the masterbatch, particularly additives for UV resistance, for example polyester or polyethylene-based, and/or additives for resistance to high temperatures, for example similarly polyester or polyethylene-based, and/or colorant additives.

Conveniently, according to the present invention, the mixture of granules for extrusion or injection moulding 250, is subjected to plasticisation 240 in a plasticisation cylinder.

If the irregular granules derive solely from fabrics of the type with carbon fibre, it has been found to be convenient to use a nozzle temperature of 250 °C, a pressure of 80 bar for injection into the mould, a dwell pressure of 30 bar in the mould, an injection speed of 35 mm/s, and an extrusion speed of 40 rpm.

If the irregular granules derive solely from fabrics of the type without carbon fibre or from one or both types of fabric, the aforesaid parameters may vary.

The process 1 may lead to the production of trays or objects of another type.

The process 1 for producing an object 400 from end-of-life surgical gowns and drapes according to the invention appears clear from what has been described and illustrated.

In practical terms, it has been observed that a process 1 for producing an object 400 from end-of-life surgical gowns and drapes according to the invention is particularly advantageous in that it is simple and economical, with operations normally carried out in production lines for the moulding of objects with thermoplastic materials.

A process 1 for producing an object 400 from end-of-life surgical gowns and drapes thus conceived is susceptible of numerous modifications and variants, all falling within the scope of the inventive concept, as defined by the claims; furthermore, all the details may be replaced by technically equivalent elements.

The materials used, as well as the dimensions, may in practice be any whatsoever according to needs and the state of the art.

## Claims

1. A process (1) for producing an object (400) from end-of-life surgical gowns and drapes comprising a fabric composed of between 98.5% and 99.5% by weight of polyester, and between 0.5% and 1.5% by weight of carbon fibre, said process comprising the following steps:
- selecting (200) said fabric, removing third elements from said surgical gowns and drapes;
- fragmenting (220) said fabric;
- sintering or densifying (300) said fragmented fabric until obtaining irregular granules;
- producing a granular mixture (310) by adding at least one solid granular impact modifier masterbatch for PET to said irregular granules in a dose comprised between 0.3% and 5.0% by weight of the granular mixture;
- plasticising (240) said granular mixture directly;
- producing said object (400) by extrusion or injection moulding (250) of said plasticised mixture.

2. The process (1) for producing an object (400) according to claim 1, **characterised in that** said impact modifier masterbatch for PET comprises an aromatic modified anionic hydrocarbon resin.

3. The process (1) for producing an object (400) according to any preceding claim, **characterised in that** it uses, in addition to said end-of-life surgical gowns and drapes comprising a fabric composed of between 98.5% and 99.5% by weight of polyester, and between 0.5% and 1.5% by weight of carbon fibre, other end-of-life surgical gowns and drapes comprising a fabric composed of 100% polyester provided with an additional polyurethane (PU) membrane.

4. The process (1) for producing an object (400) according to any preceding claim, **characterised in that** said irregular granules have maximum linear dimensions of less than 10 mm.

5. The process (1) for producing an object (400) according to any preceding claim, **characterised in that** said irregular granules have a residual moisture comprised between 0.25% and 0.30%.

6. The process (1) for producing an object (400) according to any preceding claim, **characterised in that** it comprises a pressing step (210), wherein said fabrics of said end-of-life surgical gowns and drapes are compacted into pressed bales for transport.

7. The process (1) for producing an object (400) according to any preceding claim, **characterised in that** said third elements include buttons and/or microchips.

8. The process (1) for producing an object (400) according to any preceding claim, **characterised in that** said plasticisation takes place in a plasticising cylinder with a nozzle temperature of 250 °C.

9. The process (1) for producing an object (400) according to any preceding claim, **characterised in that** said injection moulding (250) entails a pressure of injection into the mould of 80 bar, a holding pressure inside the mould of 30 bar, an injection speed of 35 mm/s and a screw speed of 40 rpm.

## Patentansprüche

1. Ein Prozess (1) zur Herstellung eines Objekts (400) aus chirurgischen Kitteln und Abdeckungen am Ende ihrer Lebensdauer, das ein Gewebe umfasst, das zu 98,5 % bis 99,5 % aus Polyester und zu 0,5 % bis 1,5 % aus Kohlefaser besteht, wobei das Verfahren die folgenden Schritte umfasst:
• Auswahl (200) des Gewebes, Entfernung von Drittelelementen aus den chirurgischen Kitteln und Abdeckungen;
• Zerkleinerung (220) des Gewebes;
• Sintern oder Verdichten (300) des zerkleinerten Gewebes bis zur Erzielung unregelmäßiger Granulate;
• Herstellung eines Granulatgemisches (310) durch Zugabe von mindestens einem festen granulären Schlagzähigkeitsmodifikator-Masterbatch für PET zu den unregelmäßigen Granulaten in einer Dosis von 0,3 % bis 5,0 % des Gewichts des Granulatgemisches;
• Plastifizierung (240) des Granulatgemisches direkt;
• Herstellung des besagten Objekts (400) durch Extrusion oder Spritzgießen (250) der plastifizierten Mischung.

2. Der Prozess (1) zur Herstellung eines Objekts (400) gemäß Anspruch 1, **dadurch gekennzeichnet, dass** das Schlagzähigkeitsmodifizierer-Masterbatch für PET ein aromatisch modifiziertes anionisches Kohlenwasserstoffharz umfasst.

3. Der Prozess (1) zur Herstellung eines Objekts (400) gemäß einem der vorhergehenden Ansprüche, **dadurch gekennzeichnet, dass** zusätzlich zu den genannten End-of-Life-Operationsmänteln und -tüchern, die aus einem Gewebe bestehen, das zwischen 98,5% und 99,5% Polyester und zwischen 0,5% und 1,5% Kohlefaser besteht, andere End-of-Life-Operationsmäntel und -tücher verwendet werden, die aus einem Gewebe bestehen, das zu 100% aus Polyester besteht und mit einer zusätzlichen Polyurethan (PU)-Membran versehen ist.

4. Der Prozess (1) zur Herstellung eines Objekts (400) gemäß einem der vorhergehenden Ansprüche, **dadurch gekennzeichnet, dass** die unregelmäßigen Granulate maximale lineare Abmessungen von weniger als 10 mm aufweisen.

5. Der Prozess (1) zur Herstellung eines Objekts (400) gemäß einem der vorhergehenden Ansprüche, **dadurch gekennzeichnet, dass** die unregelmäßigen Granulate eine Restfeuchte zwischen 0,25% und 0,30% aufweisen.

6. Der Prozess (1) zur Herstellung eines Objekts (400) gemäß einem der vorhergehenden Ansprüche, **dadurch gekennzeichnet, dass** er einen Pressschritt (210) umfasst, bei dem die Gewebe der genannten End-of-Life-Operationsmäntel und -tücher zu Pressballen für den Transport verdichtet werden.

7. Der Prozess (1) zur Herstellung eines Objekts (400) gemäß einem der vorhergehenden Ansprüche, **dadurch gekennzeichnet, dass** die genannten dritten Elemente Knöpfe und/oder Mikrochips umfassen.

8. Der Prozess (1) zur Herstellung eines Objekts (400) gemäß einem der vorhergehenden Ansprüche, **dadurch gekennzeichnet, dass** die genannte Plastifizierung in einem Plastifizierzylinder mit einer Düsentemperatur von 250 °C erfolgt.

9. Der Prozess (1) zur Herstellung eines Objekts (400) gemäß einem der vorhergehenden Ansprüche, **dadurch gekennzeichnet, dass** das genannte Spritzgießen (250) einen Einspritzdruck in die Form von 80 bar, einen Nachdruck in der Form von 30 bar, eine Einspritzgeschwindigkeit von 35 mm/s und eine Schneckendrehzahl von 40 U/min umfasst.

## Revendications

1. Un procédé (1) pour produire un objet (400) à partir de blouses et draps chirurgicaux en fin de vie comprenant un tissu composé de 98,5% à 99,5% en poids de polyester et de 0,5% à 1,5% en poids de fibre de carbone, ledit procédé comprenant les étapes suivantes :
• sélectionner (200) ledit tissu, en retirant les éléments tiers de ces blouses et draps chirurgicaux;
• fragmenter (220) ledit tissu ;
• frittage ou densification (300) dudit tissu fragmenté jusqu'à l'obtention de granules irréguliers;
• produire un mélange granulaire (310) en ajoutant au moins un modificateur d'impact granulaire solide pour PET à ces granules irréguliers dans une dose comprise entre 0,3% et 5,0% en poids du mélange granulaire ;
• plastifier (240) ledit mélange granulaire directement ;
• produire ledit objet (400) par extrusion ou moulage par injection (250) dudit mélange plastifié.

2. Le procédé (1) pour produire un objet (400) selon la revendication 1, **caractérisé en ce que** ledit modificateur d'impact masterbatch pour PET comprend une résine hydrocarbonée anionique modifiée aromatique.

3. Le procédé (1) pour produire un objet (400) selon une quelconque des revendications précédentes, **caractérisé en ce qu'**il utilise, en plus des blouses et draps chirurgicaux en fin de vie comprenant un tissu composé de 98,5% à 99,5% en poids de polyester et de 0,5% à 1,5% en poids de fibre de carbone, d'autres blouses et draps chirurgicaux en fin de vie comprenant un tissu composé de 100% polyester doté d'une membrane supplémentaire en polyuréthane (PU).

4. Le procédé (1) pour produire un objet (400) selon une quelconque des revendications précédentes, **caractérisé en ce que** lesdits granules irréguliers ont des dimensions linéaires maximales inférieures à 10 mm.

5. Le procédé (1) de production d'un objet (400) selon une quelconque des revendications précédentes, **caractérisé en ce que** lesdits granules irréguliers ont une humidité résiduelle comprise entre 0,25 % et 0,30 %.

6. Le procédé (1) de production d'un objet (400) selon une quelconque des revendications précédentes, **caractérisé en ce qu'**il comprend une étape de pressage (210), où lesdits tissus des blouses et draps chirurgicaux en fin de vie sont compactés en balles pressées pour le transport.

7. Le procédé (1) de production d'un objet (400) selon une quelconque des revendications précédentes, **caractérisé en ce que** lesdits troisièmes éléments incluent des boutons et/ou des micropuces.

8. Le procédé (1) de production d'un objet (400) selon une quelconque des revendications précédentes, **caractérisé en ce que** ladite plastification a lieu dans un cylindre de plastification avec une température de buse de 250 °C.

9. Le procédé (1) de production d'un objet (400) selon une quelconque des revendications précédentes, **caractérisé en ce que** ledit moulage par injection (250) implique une pression d'injection dans le moule de 80 bar, une pression de maintien à l'intérieur du moule de 30 bar, une vitesse d'injection de 35 mm/s et une vitesse de vis de 40 tr/min.
